# EUROPEAN PATENT APPLICATION

(11) **EP 2 957 434 A1**
(43) Date of publication of application: **23.12.2015**
(21) Application number: 14185971.0
(22) Date of filing: 23.09.2014
(51) Int. Cl.: B60C 5/10

(54) **Quick assembly bicycle inner tube**

(30) Priority: 19.06.2014 CN 201420326609 U
(71) Applicant: Shanghai Tianma Vancom Rubber Products Co. Ltd., Shanghai (CN)
(72) Inventor: Zhao, Quanming, Shanghai (CN); Yang, Xueyun, Shanghai (CN)
(74) Representative: Viering, Jentschura & Partner mbB Patent- und Rechtsanwälte

(57) **Abstract**

The invention concerns an inner tube that can be quickly installed, which comprises a long strip-like hollow cylindrical body (1) with a valve (2) fixed on it, a convex type end cap fixed to one end of the hollow cylindrical body and a concave type end cap fixed to its other end; the main body of both the convex type end cap and of the concave type end cap comprises an annular cup body and a closed cup bottom; an inner recessed central sinkhole (51) is arranged on an end face of the closed cup bottom of the concave type end cap; a positioning plug (41) is arranged on an end face of the closed cup bottom of the convex type end cap; in use, the positioning plug (41) is tightly inserted in the centrally arranged sinkhole (51) that is recessed towards the inside.

## Description

### Field of technology

The invention concerns a kind of inner tube, for example a pneumatic or air-filled inner tube, for example for a bicycle. In particular, it can be repaired or changed without disassembling the wheel set. It is a long, strip-like inner tube which can be assembled quickly by hand.

### Background of technology

Traditionally, a bicycle tire comprises a ring shaped tire and a closed (or ring-shaped) inner tube. During use, the inner tube is surrounded by the tire and when inflated, it is embedded on the wheel set whose axle is installed on the front or rear fork of the bicycle. When the inner tube is leaking air, needs to be fixed or changed, special tools are needed to remove the whole wheel set from the fork to lever off the tire and pull out without hindrance the inner tube in order to fix or replace the inner tube. As mounting and removing of the wheel set, the inner tube and the tire needs to be performed by a specialized repair man with special tools, money and effort are wasted, besides it being a nuisance. This is especially so, when riding in the countryside and the inner tube suddenly loses air, which is not easy to handle without help even when one has taken along a replacement inner tube. Therefore, from a usability and economical point of view, the structure of current traditional ring-shaped closed inner tubes is still not rational.

### Summary of the invention

An object of the invention is to overcome the inconvenience and low usability when fixing or changing a traditional ring-shaped closed inner tube by providing a long (or longish or longitudinal shaped) strip quick assembly (or quick mountable or installable) inner tube (such as a pneumatic inner tube) which can be repaired or changed by hand without disassembling the whole wheel set.

The quick assembly pneumatic inner tube main body comprises an inner tube body and a valve arranged on the inner tube body. The special feature of the inner tube main body is being long, strip-like and open (that is, it is not closed or ring-shaped). It comprises a hollow cylindrical body with a valve fixed on it, a convex (or projection) type end cap (or end portion or head piece or cover head) fixed to one end of the hollow cylindrical body and a corresponding concave (or recessed) type end cap (or end portion or head piece or cover head) fixed to its another end. The main body of both the convex type and the concave end caps is cup-shaped and round (or annular), having an round (or annular) cup body and a sealed (or closed) cup bottom structure. The outer diameter of the annular cup body and the outer diameter of the long strip hollow cylindrical body match each other closely. The end face (or surface) of the sealed cup bottom of the concave end cap has an inner recessed (or recessed towards the inside) central (or centrally arranged or centric) sinkhole arranged on it. The end face (or surface) of the sealed cup bottom of the convex type end cap has a positioning plug (or stud) matching and extending into the inner recessed central sinkhole arranged on it. The concave type end cap, the convex type end cap and the hollow cylindrical body are all made from the same material.

When in use, the quick assembly inner tube is formed into a ring (or closed) shape by interconnecting the end with the inner recessed central sinkhole on it and the other end with the positioning plug on it. It is placed into a tire and is surrounded by the tire. Together with the tire it is placed on the wheel. After being pumped up with air, the end faces of the end caps of both ends are tightly, smoothly and seamlessly connected, providing the same functionality as a traditional, closed (or ring-shaped) inner tube. When an inner tube needs to be replaced or repaired, no special tools are needed to disassemble the entire wheel assembly, and one is not limited to a certain working environment. The bike user can directly lift off the tire by hand and after it is deflated, separate the two ends of the inner tube and remove the tube for repair or replacement. This will save time, effort and is very convenient. Further, it may be taken along as a spare part in a deflated and folded state.

Based on the above concept of the quick assembly inner tube, the open longish inner tube can be easily interconnected due to the quick (or simple) positioning of its ends, making it easy for a user to replace or repair the inner tube as no special tools are required to disassemble the entire wheel assembly and no special working environment is required. Instead, he can directly and efficiently use his hands, saving time and effort and being convenient. The mounted inner tube can be directly used after inflation, and is equally effective as present ordinary closed form inner tubes. In the deflated state, it may be folded and taken along as a spare. The whole structure is rational and simple, easy to use, flexible, and portable (or mobile). As it compatible and interchangeable with the existing ordinary inner (inflatable or pneumatic) tubes, and therefore economical, it is an ideal replacement product for the present ordinary inflatable inner tube.

In the following description, various embodiments of the invention are described with reference to the following drawings, in which:
- **FIG. 1**: shows an illustration of the main structure of an embodiment of the quick assembly inner tube;
- **FIG. 2**: shows an illustration for assembling an embodiment of the quick assembly inner tube;
- **FIG. 3**: shows an illustration of a structure of a convex end cap of an embodiment of the quick assembly inner tube; and
- **FIG. 4**: shows an illustration of a structure of a concave end cap of an embodiment of the quick assembly inner tube.

### Detailed description

The quick assembly inner tube is explained in more detail below with the help of the attached figures and embodiments.

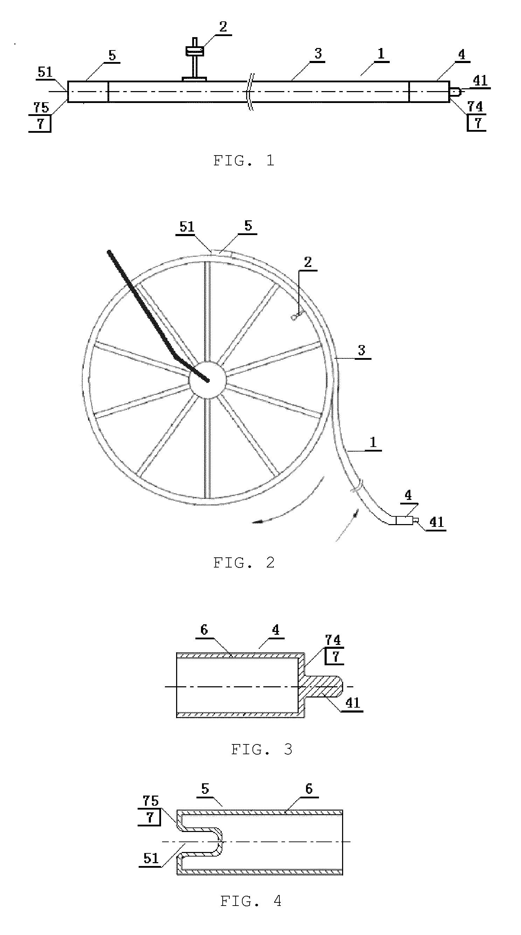

In FIG. 1 to FIG. 4, the main body of an embodiment of the quick assembly inner tube comprises the tube body 1 and a valve 2 arranged on the tube body 1. A features of the tube body 1 is its long (or longish), open (or not closed in the sense of a ring, with its ends not being connected to each other) strip-like main body. It comprises a long strip-like hollow cylindrical body 3 on which a valve 2 is pasted and on whose one side a convex type end cap (or cover head) 4 and on its other side a concave type end cap (or cover head) 5 are arranged. The body of the convex end cap 4 and of the concave end cap 5 is round and cup shaped. Their bodies comprise a round (or annular) cup body 6 and a sealed (or closed) cup bottom 7. The outer dimension (or outer diameter) of the round cup body 6 is the same as the outer dimension (or outer diameter) of the long strip hollow body 3 and they are in tight contact with each other. A concave closed cup bottom 75 arranged on the concave end cap 5 comprises a central (or centrally arranged) sinkhole 51 that is recessed towards the inside (or inner recessed). A convex closed cup bottom 74 arranged on the convex end cap 4 comprises a positioning plug (for setting or fixing the position) 41 which matches (or has the same position and dimension as) the centrally arranged sinkhole 51 that is recessed towards the inside 51. The concave end cap 5, the convex end cap 4 and the hollow body 3 are made of the same material.

When in use, the quick assembly inner tube is formed into a ring (or ring shaped form or a closed form) by interconnecting the centrally arranged sinkhole 51 that is recessed towards the inside and fixed on one of its ends and the positioning plug that is fixed on its other end. The inner tube is placed into a tire, being surrounded by it. Then, being inside the tire, it is positioned on the wheel. After it has been pumped up with air, the two closed cover heads (or end caps) of the positioning plug 41 and the centrally arranged sinkhole 51 that is recessed towards the inside are tightly plugged (or stuck) into each other and connected to each other. They can't be wrongly positioned and meet in a seamless and smooth manner. This provides the same functionality as a traditional, closed form bicycle inner tube. When an inner tube needs to be replaced or repaired, the entire wheel assembly does not need to be disassembled using special tools. Further, one is not limited to a certain working environment. The bicycle user can directly lift off the tire using his hands and after deflating it, he can separate the two ends of the inner tube and take it out for repair or replacement. This will save time and effort and is also convenient. Further, it may be taken along on the bike as a replacement in a deflated and folded state.

### Reference signs

- 1.: tube body
- 2.: valve
- 3.: hollow cylindrical body
- 4.: convex type end cap
- 41.: convex positioning plug
- 5.: concave type end cap
- 51.: centric sinkhole
- 6.: round cup body
- 7.: closed cup bottom
- 74.: convex closed cup body
- 75.: concave closed cup body

## Claims

1. A quick assembly inner tube, comprising a tube body (1) and a valve (2) arranged on the tube body (1), wherein
the tube body (1) has a long, strip-like and open form of a long hollow cylindrical body (3) with the valve (2) arranged on it, wherein
a convex end cap (4) is fixed to one side of the hollow cylindrical body (3) and a concave end cap (5) is fixed to the other side of the hollow cylindrical body (3), wherein
a.) a body of both the convex end cap (4) and of the concave end cap (5) is round and cup-shaped, comprising an annular cup body (6) and a closed cup bottom (7);
b.) an outer diameter of the annular cup body (6) matches an outer diameter of the long hollow cylindrical body (3) tightly; and
c.) a centrally arranged sinkhole (51) that is recessed towards the inside of the inner tube is arranged at a concave closed cup bottom (75) of the concave end cap (5), and
a positioning plug (41) which matches the centrally arranged sinkhole (51) that is recessed towards the inside is arranged at the convex closed cup bottom (74) of the convex end cap (4).
